# EUROPÄISCHE PATENTSCHRIFT

(11) **EP 0 501 199 B1**
(45) Veröffentlichungstag und Bekanntmachung des Hinweises auf die Patenterteilung: **08.06.1994**
(21) Anmeldenummer: 92102039.2
(22) Anmeldetag: 07.02.1992
(51) Int. Cl.: H02K 1/28

(54) **Läufer für kleine Elektromotoren**
Rotor for small electromotors
Rotor pour petits moteurs électriques

(30) Priorität: 27.02.1991 DE 4106131
(43) Veröffentlichungstag der Anmeldung: 02.09.1992
(73) Patentinhaber: Licentia Patent-Verwaltungs-GmbH, 60596 Frankfurt (DE)
(72) Erfinder: Romberg, Lothar, W-2900 Oldenburg (DE); Henke, Jürgen, W-2900 Oldenburg (DE)
(74) Vertreter: Zangs, Rainer E., Dipl.-Ing.

(56) Entgegenhaltungen:
- EP-A- 0 278 200
- CH-A- 165 947
- CH-A- 524 916
- DD-A- 128 644
- DE-A- 2 525 544
- GB-A- 1 486 489
- GB-A- 1 486 489

## Beschreibung

Die Läuferwelle von relativ kleinen Elektromotoren ist häufig kundengerecht auszubilden, da es selten einen Kleinmotor gibt, der in gleicher Ausführung an einen zweiten oder mehrere Kunden geliefert werden kann.
Zumindest auf der Antriebsseite muß die Läuferwelle den jeweiligen Einbauverhältnissen Rechnung tragen, während sie auf der Gegenseite maßlich oft gleich ausgebildet ist bzw. sein kann. Für den Motorenhersteller bedeutet dies, daß selbst bei großen Stückzahlen eines Schnittyps eine Vielzahl von kundenspezifischen Wellen anfällt, die zum Teil in kleinen Losgrößen angefertigt werden müssen, die eine Vielzahl von Meisterwellen oder CNC-Programmen erforderlich machen, wodurch der Rüstaufwand erheblich wird.

Aus DE-A1-2525544 ist bekannt, eine Motorwelle dreiteilig auszubilden um eine Anpassung an dem jeweiligen Verwendungszweck zu erleichtern. Ebenfalls ist aus EP-A1-0278200 eine Motorwelle mit an einem Wellemittelstück geringen Durchmessers angeschraubten A und B seitigen Wellenstümpfen bekannt.

Der Erfindung liegt die Aufgabe zugrunde, die Läuferwellen so auszugestalten, daß der Läufer unabhängig von einer kundenspezifischen Ausbildung seiner Welle in großen Losgrößen gefertigt werden und seine kundenspezifische Zuordnung durch nach Bedarf spätere Komplettierung der Läuferwelle vorgenommen werden kann.

Diese Aufgabe ist erfindungsgemäß mit den Merkmalen im kennzeichnenden Teil des Anspruchs 1 gelöst.

Weiterbildungen und zweckmäßige Ausgestaltungen der Erfindung sind in den Unteransprüchen angegeben.

Durch die Erfindung werden insbesondere auch die Vorteile erzielt, daß hochwertiger Wellenstahl zumindest häufig lediglich für die antriebsseitigen Wellenstümpfe benötigt wird, daß für die im Läuferpaket befindliche Einheitswelle kein hochwertiger Wellenstahl erforderlich ist, ebensowenig für den B-seitigen Wellenstumpf,und daß ferner durch die Möglichkeit der Verringerung des Durchmessers des im Läuferblechpaket sitzenden Wellenteils (Einheitswelle) eine wesentliche Ersparnis an Wellenmaterial gegeben ist.

Die Erfindung wird im nachstehenden anhand der Zeichnung erläutert.

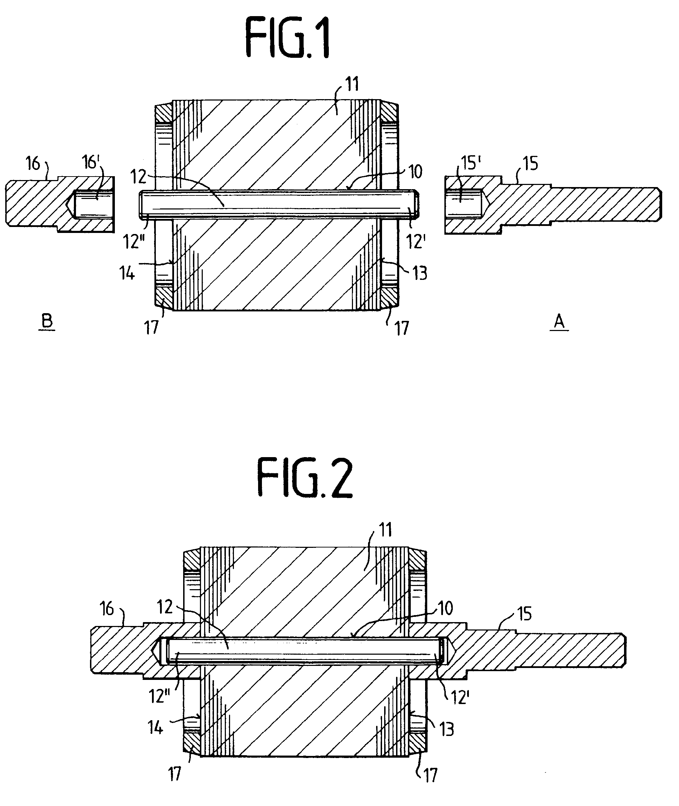

Wie aus Figur 1 ersichtlich ist, ist in die Mittelbohrung 10 im Läuferblechpaket 11, deren Durchmesser im Vergleich zum bisher üblichen Durchmesser um ca. 50 % verringert ist, ein eine Einheitswelle bildendes Mittelstück (12) eingepreßt, das nach dem Druckgießen im Läuferblechpaket 11 verbleibt. Die Herstellung von Schichtdornen, die später ausgepreßt werden müssen, erübrigt sich. Die beiden Enden 12′ und 12˝ des Wellenmittelstücks 12 stehen beidseits um ein hinreichendes Stück frei über die betreffende Stirnseite 13, 14 des Läufers über. Als Material für das Wellenmittelstück 12 wird aus Kostenersparnisgründen unlegierter Automatenstahl verwendet.
Derartige Läufer können nunmehr vor der Zuordnung zu den Kunden in großen Stückzahlen gefertigt und gewissermaßen als Baugruppen bereitgestellt werden.
Die antriebsseitigen Wellenstümpfe 15 (A-seitige Wellenenden) aus hochwertigem Wellenstahl werden dann entsprechend der jeweiligen Kundenspezifikation angefertigt und beispielsweise mit einer Sackbohrung 15′ versehen, die dem Durchmesser des antriebsseitigen Wellenendes 12′ angepaßt ist, so daß der kundenspezifisch ausgebildete Wellenstumpf 15 auf das Wellenende 12′ aufschiebbar und mit diesem durch Schweißen oder Klebung fest verbindbar ist. Einen entsprechend komplettierten Läufer zeigt Figur 2.

Entsprechendes gilt für den gegenüberliegenden Wellenstumpf 16 (B-seitiger Wellenstumpf). Auch dieser wird mit einer dem Durchmesser des B-seitigen Wellenendes 12˝ angepaßten Sackbohrung 16˝ versehen, so daß er auf das Wellenende 12˝ aufschieb- bzw. aufpreßbar ist und mit diesem erforderlichenfalls durch eine Klebe- oder Schweißverbindung fest vereinigt wird.

Die Befestigung der beiden Wellenstümpfe 15 und 16 auf den Wellenenden 12′ und 12˝ kann dabei auf automatischem Weg erfolgen. Da das B-seitige Wellenende 12˝ erfahrungsgemäß weitgehend einheitlich ist, können auch die B-seitigen Wellenstümpfe 16 in großen Stückzahlen hergestellt werden, wobei als Material unlegierter Automatenstahl verwendet wird.

Wünscht ein Kunde für den gleichen Anwendungsfall beispielsweise Motoren mit unterschiedlichen Leistungen bei gleichbleibendem Außendurchmesser des Läuferblechpakets, so ist die Länge des Läuferblechpakets entsprechend zu verändern. Da die Wellenstümpfe 15 und 16 gleich bleiben, braucht lediglich die Einheitswelle 12 kürzer oder länger bemessen zu werden.
Die Kurzschlußringe des Läufers sind mit 17 bezeichnet.

## Patentansprüche

1. Läufer für kleine Elektromotoren, dessen Läuferwelle dreiteilig ausgebildet ist, wobei ein Wellenmittelstück (12) das Läuferblechpaket (11) aufnimmt und beidseitig über die Stirnseiten des Läufers überstehende freie Ende (12′, 12˝) aufweist, von denen das eine Ende (12′) als Aufnahme für den separat gefertigten A-seitigen Wellenstumpf (15) und das andere Ende (12˝) als Aufnahme für den ebenfalls getrennt hergestellten B-seitigen Wellenstumpf (16) dient, wobei das Wellenmittelstück (12) einen geringeren Durchmesser aufweist als die mit diesem fest vereinigten A und B- seitigen Wellenstümpfe (15, 16) **dadurch** **gekennzeichnet,** daß der A- und B-seitige Wellenstumpf (15, 16) jeweils mit einer Sackbohrung (15′, 16′) versehen ist, die ein Befestigen der beiden Wellenstümpfe (15, 16) auf dem jeweils zugeordneten Ende (12′, 12˝) des Wellenmittelstücks (12) ermöglicht, und daß das Wellenmittelstück (12) und der B-seitige Wellenstumpf (16) aus unlegiertem Automatenstahl und der A-seitige Wellenstumpf (15) aus hochwertigem Wellenstahl bestehen.

2. Läufer nach Anspruch 1, **dadurch gekennzeichnet,** daß die beiden A- und B-seitigen Wellenstümpfe (15, 16) mit dem jeweils zugeordneten Ende (12′, 12˝) des Wellenmittelstücks (12) verschweißt sind.

3. Läufer nach Anspruch 1, **dadurch gekennzeichnet,** daß die beiden A- und B-seitigen Wellenstümpfe (15, 16) auf das zugeordnete Ende (12′, 12˝) des Wellenmittelstücks (12) aufgeklebt sind.

## Claims

1. Rotor for small electric motors, the rotor shaft of which is constructed in three parts, wherein a shaft centre member (12) receives the rotor lamination body (11) and has free ends (12′, 12˝) projecting at both sides beyond the end faces of the rotor, of which one end (12′) serves as receptacle for the separately made stub shaft (15) at the A side and the other end (12˝) as receptacle for the similarly separately produced stub shaft (16′) at the B side, wherein the shaft centre member (12) has a smaller diameter than the stub shafts (15, 16) fixedly combined therewith, characterised thereby that the stub shaft (15, 16) at the A side and B side is provided with a respective blind bore (15′, 16′), which enables a fastening of the two stub shafts (15, 16) to the respectively associated end (12′, 12˝) of the shaft centre member (12) and that the shaft centre member (12) and the stub shaft (16) at the B side consist of a plain automatic steel and the stub shaft (15) at the A side consists of high-grade shaft steel.

2. Rotor according to claim 1, characterised thereby that the two stub shafts (15, 16) at the A and B sides are welded to the respectively associated ends (12′, 12˝) of the shaft centre member (12).

3. Rotor according to claim 1, characterised thereby that the two stub shafts (15, 16) at the A and B sides are glued to the respectively associated ends (12′, 12˝) of the shaft centre member (12).

## Revendications

1. Rotor pour petits moteurs électriques, dont l'arbre de rotor est conçu en trois parties, un tronçon central (12) étant destiné au logement de l'empilage de tôles (11) du rotor et présentant des deux côtés des extrémités (12′, 12˝) dépassant au-delà des faces frontales du rotor, dont une extrémité (12′) sert de logement pour le bout d'arbre (15) fabriqué séparément du côté A et dont l'autre extrémité (12˝) sert de logement pour le bout d'arbre (16) fabriqué également séparément du côté B, le tronçon central (12) présentant un diamètre inférieur à celui des bouts d'arbre (15, 16), côte A et B, qui y sont reliés fixement, caractérisé en ce que le bout d'arbre (15, 16) côté A et B est muni à chaque fois d'un trou borgne (15′, 16′), qui permet une fixation des deux bouts d'arbre (15, 16) sur l'extrémité respective (12′, 12˝) du tronçon central (12) de l'arbre et, en ce que le tronçon central (12) de l'arbre et le bout d'arbre (16) côté B se composent d'acier de décolletage non allié et le bout d'arbre (15) côté A se compose d'acier à arbres de qualité supérieure.

2. Rotor selon la revendication 1, caractérisé en ce que les deux bouts d'arbre (15, 16), côté A et B, sont soudés à l'extrémité respective (12′, 12˝) du tronçon central (12) de l'arbre.

3. Rotor selon la revendication 1, caractérisé en ce que les deux bouts d'arbres (15, 16), côté A et B, sont collés sur l'extrémité respective (12′, 12˝) du tronçon central (12) de l'arbre.
